# EUROPÄISCHE PATENTSCHRIFT

(11) **EP 0 639 491 B1**
(45) Veröffentlichungstag und Bekanntmachung des Hinweises auf die Patenterteilung: **08.01.1997**
(21) Anmeldenummer: 94250199.0
(22) Anmeldetag: 15.08.1994
(51) Int. Cl.: B62D 11/14

(54) **Lenkeinrichtung für Gleiskettenlaufwerke**
Steering device for a track laying running gear
Dispositif de direction pour un train de roulement à chenille

(30) Priorität: 17.08.1993 DE 4328334
(43) Veröffentlichungstag der Anmeldung: 22.02.1995
(73) Patentinhaber: CLAAS Kommanditgesellschaft auf Aktien, 33428 Harsewinkel (DE)
(72) Erfinder: Bolo, Alojz, SK-036 01 Martin (SK); Habarda, Pavol, SK-036 01 Martin (SK)
(74) Vertreter: Radwer, Dieter

(56) Entgegenhaltungen:
- EP-A- 0 359 654
- AT-B- 383 556
- DE-A- 1 580 317

## Beschreibung

Die Erfindung betrifft eine Lenkeinrichtung für Gleiskettenlaufwerke mit hydrostatischem Antrieb, vorzugsweise für selbstfahrende Maschinen, die in Abhängigkeit von den Einsatzbedingungen mit einem Räder- oder Gleiskettenlaufwerk auszurüsten sind.

Für die Lenkung von selbstfahrenden Maschinen mit einem Gleiskettenlaufwerk werden neben den einfachen, aus Lenkkupplung und Lenkbremsen bestehenden Lenkeinrichtungen, auch zwei- und mehrstufige Planetengetriebelenkungen sowie Doppeldifferentiallenkungen eingesetzt.

Die einfachen Kupplungsbremslenkungen sichern der Maschine bzw. dem Fahrzeug eine stabile Geradeausfahrt. Die Lenkkupplungen und Lenkbremsen unterliegen jedoch bei Kurvenfahrten, insbesondere beim Wenden sehr hohen Belastungsmomenten, da ein erheblicher Teil oder die gesamte, an die Innenkette abgegebene Antriebsleistung in der Bremse und in der Kupplung in Reibung und in Wärme umgesetzt werden muß. Diese einfachen Lenkvorrichtungen haben daher auch einen sehr ungünstigen Wirkungsgrad.

Eine wesentliche Verbesserung wird mit Planetenlenk- und Differentiallenkvorrichtungen erzielt, die die Drehmomente an den Antriebsrädern der Gleiskette und die Umlaufgeschwindigkeiten der Innen- und Außenkette verändern. Bei nahezu allen Konstruktionen ist das Hohlrad eines Planetenradgetriebes, das als Lenk- und Differentialvorrichtung eingesetzt wird, mit der Antriebswelle des Schaltgetriebes und die Stegwelle der Planetenräder mit den Antriebswellen für die Antriebsräder der Gleiskette fest verbunden, während die Sonnenräder kinematisch miteinander gekoppelt und antriebsseitig mit einem Lenkantriebsgetriebe oder einem Hydromotor der Lenkung verbunden sind - US 4 280 579; DE 32 02 880 C2; AT 383 556 B; DE 38 33 784 A1 und DE 24 23 664 A1.

Das Schaltgetriebe und die Getriebe der Planeten- oder Differentiallenkvorrichtungen sind regelmäßig zu einer integrierten Getriebeanordnung zusammengefaßt und für jedes anzutreibende Fahrzeug oder für jede selbstfahrende Maschine individuell angepaßt, in einem gemeinsamen Getriebegehäuse angeordnet. Aufgrund ihrer individuellen konstruktiven Ausbildung lassen diese Lösungen ohne wesentlichen Eingriff in den konstruktiven Aufbau und in die Ausbildung der Getriebegehäuse keine größeren Änderungen oder Modifikationen in Bezug auf die für ihren Einbau erforderlichen Bauräume und Einbauabmessungen zu.

Der Erfindung liegt daher die Aufgabe zugrunde, eine Lenkeinrichtung für Gleiskettenlaufwerke vorzuschlagen, die bei gegebenen Einbaubedingungen ohne großen zusätzlichen Aufwand mit den vorhandenen Getriebeanordnungen baukastenartig verknüpft und an sich ändernde Einbaubedingungen angepaßt werden kann.

Erfindungsgemäß wird die Aufgabe dadurch gelöst, daß die Lenkeinrichtung, die in bekannter Weise aus Planetenraddifferentialen besteht, dem jeweiligen Antriebsrad der Gleiskette zugeordneten werden, in separate Getriebegehäuse angeordnet und im Bereich eines Einstellwinkels α um die Abtriebswelle eines Schaltgetriebes verschwenkbar am Schaltgetriebegehäuse lösbar befestigt sind, wobei an den Außenseiten der Getriebegehäuse der Lenkeinrichtung Betriebsbremsen vorgesehen sind, die auf die Stegwellen der Lenkeinrichtung einwirken und mindestens in einem der Getriebegehäuse die Abtriebswelle eines Lenkantriebes angeordnet und mit der kinematischen Kopplung zwischen den Sonnenrädern beider Planetendifferentiale verbunden und im anderen Getriebegehäuse die kinematische Kopplung mit dem Sonnenrad über ein Zwischenrad erfolgt.

Die Getriebewelle, die die kinematische Kopplung zwischen den Sonnenrädern beider Planetenraddifferentiale herstellt, ist mit einer staubdichten Abdeckung versehen, die an den Gehäusen der Lenkeinrichtung lösbar befestigt ist. Die Abdeckung besteht vorteilhafterweise aus zwei teleskopartig ineinanderliegenden, längsverstellbaren Rohrelementen, zwischen denen eine Dichtung vorgesehen ist und die an den freien Endseiten Flansche besitzen, die der Befestigung der Abdeckung an den Innenseiten der Gehäuse der Planetendifferentiale dienen. Nach einem weiteren vorteilhaften Merkmal der Erfindung ist das Lenkgetriebe, das in vielen Fällen ein Hydromotor ist, direkt an einem der Getriebegehäuse der Planetendifferentiale befestigt.

Die vorgeschlage Lösung gestattet mit minimalem Aufwand die Umrüstung des Radlaufwerkes eines Fahrzeuges oder einer selbstfahrenden Maschine mit einem Gleiskettenlaufwerk, wobei die vorhandenen Antriebs- und Getriebeanordnungen weiter genutzt werden können. Durch die verstellbare Anordnung der Lenkeinrichtung gegenüber dem Schaltgetriebe kann den zur Verfügung stehenden, unterschiedlich großen Bauräumen Rechnung getragen und die erfindungsgemäße Getriebeanordnung aus Schaltgetriebe und separaten Planetenraddifferentialen auf relativ einfache Weise an die unterschiedlichen Einbaubedingungen angepaßt werden. Vorhandene fertigungsbedingte Toleranzen am Fahrwerk und an der Fahrwerksanordnung der Maschine oder Fahrzeuges sind gegebenenfalls mit Hilfe der vorgeschlagene Lösung zu kompensieren.

Die Erfindung soll nachstehend an einem Ausführungsbeispiel näher erläutert werden.

In den dazu gehörigen Zeichnungen zeigen:

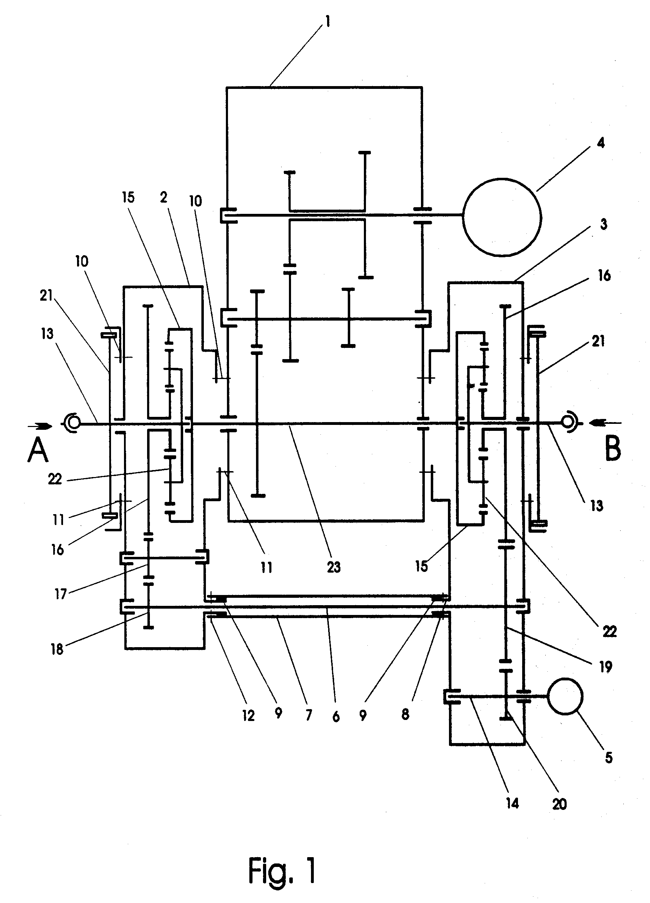

- Fig. 1: eine schematische Darstellung der aus Schaltgetriebe und den Lenkeinrichtungen bestehenden Getriebeanordnung für ein Gleiskettenfahrzeug;
- Fig. 2: die Seitenansicht aus Richtung A;
- Fig. 3: die Seitenansicht aus Richtung B.

An den beiden Abtriebsseiten eines von einem Hydromotor 4 angetriebenen Schaltgetriebes 1 des Maschinenantriebes für eine selbstfahrende landwirtschaftliche Maschine, die ursprünglich mit einem Räderlaufwerk konzipiert worden war, sind zur Lenkung eines Gleiskettenlaufwerkes, das aufgrund spezifischer Einsatzbedingungen der Maschine vor Ort anstelle des Räderlaufwerkes einzusetzen ist, Lenkeinrichtungen in Form von Planetenraddifferentialen vorgesehen, die durch eine Getriebewelle 6 miteinander kinematisch gekoppel sind. Die Planetenraddifferentiale, die dem jeweiligen Antriebsrad der Gleiskette zugeordnet sind, sind in einem separaten Getriebegehäuse 2;3 angeordnet und durch Schraubverbindungen 10 und Stifte 11 lagegesichert und lösbar am Getriebegehäuse des Schaltgetriebes 1 befestigt. In bekannter Weise sind die Hohlräder 15 der Planetendifferentiale fest mit den Abtriebswelle 23 des Schaltgetriebes 1 verbunden und auf den die Planetenräder 22 tragenden Stegwellen 13 die Antriebsräder der Gleiskette (nicht dargestellt) fest angeordnet. Die Sonnenräder 16 beider Planetendifferentiale sind kinematisch über die Welle 6, die in den Getriebegehäusen 2;3 drehbar gelagert ist, verbunden, wobei ein im Gehäuse 2 angeordnetes Zwischenrad 17 in das auf der Welle 6 fest angeordnete Stirnrad 18 eingreift und die Drehverbindung zum Sonnenrad 16 herstellt und im Getriebegehäuse 3 das Sonnenrad 16 direkt in das auf der Welle 6 befindliche Stirnrad 19 eingreift. Im Getriebegehäuse 3 ist ferner die Abtriebswelle 14 eines vorteilhafterweise am Getriebegehäuse 3 befestigten Hydromotors 5 der Lenkung des Fahrzeuges oder der selbstfahrenden Maschine gelagert, die die Drehzahl und die Drehrichtung des Hydromotors über das Stirnrad 20 auf die Welle 6 und somit zur Differentialsteuerung auf die Sonnenräder 16 überträgt.

Durch die infolge eines Lenkeinschlags ausgelösten Änderungen in der Drehzahl des Hydromotors 5 werden in Abhängigkeit von ihrer Drehrichtung mit Hilfe der Planetenraddifferentiale die Drehzahlen der Stegwelle 13 für das Antriebsrad auf dem Außenradius des Dreh- oder Wendekreises und damit die Umlaufgeschwindigkeit der äußeren Gleiskette erhöht und die Drehzahlen der Stegwelle 13 für das Antriebsrad auf dem Innenradius und damit auch die Umlaufgeschwindigkeit der auf diesen Radius laufenden inneren Kette reduziert, wobei die abgegeben Antriebsmomente vollständig auf die Gleisketten übertragen und für das Wendemanöver oder für die Kurvenfahrt ausgenutzt werden und ein schnelles, stufenloses Wenden gewährleistet ist.

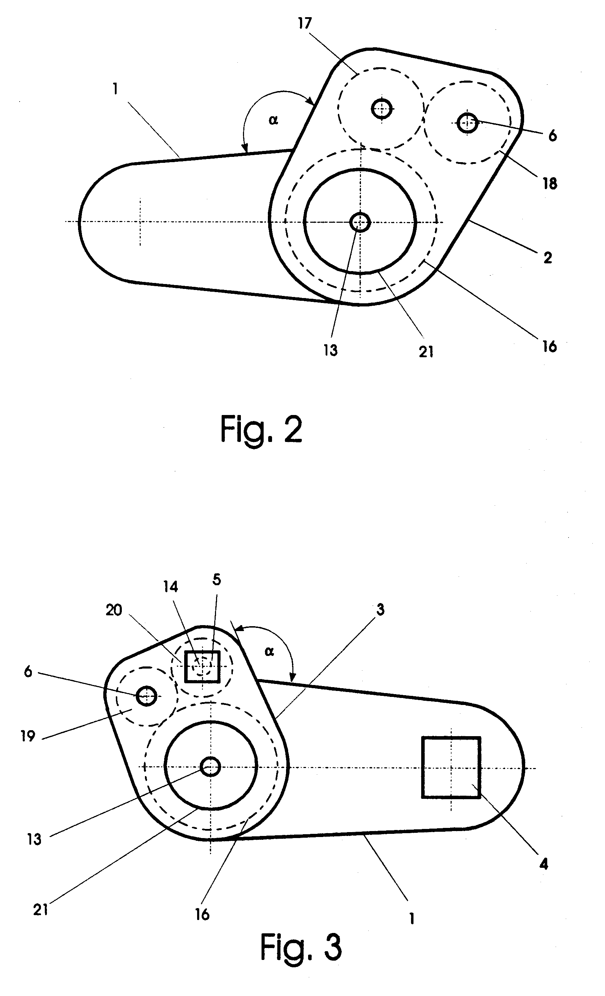

Wie aus den Fig. 2 und 3 hervorgeht, können die mit dem Getriebegehäuse des Schaltgetriebes 1 lösbar verbundenen Lenkeinrichtungen innerhalb eines Winkelbereiches α um die Abtriebsachse 23 des Schaltgetriebes 1 verschwenkt werden, wodurch eine relativ einfache und schnelle Anpassung der aus dem Schaltgetriebe 1 und den Lenkeinrichtungen bestehenden Getriebeanordnung an die jeweilig vorhandenen Bauräume und Einbauabmessungen gegeben ist.

Auf den Außenseiten der Getriebegehäuse 2;3 der Lenkeinrichtungen sind Bremsen 21 angeordnet, die mit den Stegwellen 13 zusammenwirken und u.a. dazu dienen, den Schwenkvorgang der Maschine bei einer Kurvenfahrt oder beim Wenden zu unterstützen.

Vorteilhafterweise sind im Gehäuse des Schaltgetriebes 1 Schraubenbohrungen für den Anschluß der Lenkeinrichtungen vorgebohrt oder vorgezeichnet, um eine schnelle und einfache Positionierung der Lenkeinrichtung bezüglich der unterschiedlichen Einbaubedingungen vornehmen zu können. Außerdem wird auf diese einfache Weise erreicht, daß die Lager und Getriebebohrungen für die Welle 6 in den Getriebegehäusen 2;3 der beiden Lenkeinrichtungen genau fluchten und eine schnelle und sichere Montage gegeben ist.

Die Welle 6 für die kinematischen Kopplung zwischen den beiden Lenkeinrichtungen ist von einer Abdeckung umschlossen, die die Welle 6 vor Verschmutzungen und Beschädigungen schützt und gleichzeitig auch den Innenraum der Getriebe der Lenkeinrichtungen abdichtet. Die Abdeckung besteht aus Rohrelementen 7;8, die teleskopartig ineinandergreifend angeordnet und gegeneinander durch eine zwischen den Elementen befindliche Dichtung 9 staubdicht abgeschlossen sind. Die freien Enden der Rohrelemente weisen Flansche zur Befestigung der Abdichtung an den Seiten der Getriebegehäuse 2;3 auf. Die teleskopartige Anordnung der Rohrelemente 7;8 zueinander ermöglicht eine leichte Änderung der Achslänge der Abdeckung, wodurch ebenfalls eine schnelle und einfache Anpassung an unterschiedliche Einbaubedingungen und Bauräume gesichert ist.

### Bezugszeichenaufstellung

- 1: Schaltgetriebe
- 2: Getriebegehäuse
- 3: Getriebegehäuse
- 4: Hydromotor
- 5: Hydromotor
- 6: Welle
- 7: Rohrelement
- 8: Rohrelement
- 9: Staubdichtung
- 10: Schraubverbindung
- 11: Stift
- 12: Schraubverbindung
- 13: Stegwelle
- 14: Abtriebswelle
- 15: Hohlrad
- 16: Sonnenrad
- 17: Zwischenrad
- 18: Stirnrad
- 19: Stirnrad
- 20: Stirnrad
- 21: Betriebsbremse
- 22: Planetenrad
- 23: Abtriebswelle

## Patentansprüche

1. Lenkeinrichtung für Gleiskettenlaufwerke mit hydrostatischem Antrieb, bestehend aus kinematisch miteinander verbundenen Differentialvorrichtungen in Form von Planetenradgetrieben (13;15;16;;22), die jeweils den Antriebsrädern des Gleiskettenlaufwerkes zugeordnet sind, wobei die Hohlräder (15) beider Planetengetriebe fest mit der Abtriebswelle (23) des Schaltgetriebes (1) des Maschinenantriebes (4) und die Stegwellen (13) der Planetenräder (22) fest mit einer der Antriebswellen für die Antriebsräder der Gleiskette verbunden sind, während die Sonnenräder (16) über ein Ausgleichsglied (6;17;18;19) miteinander kinematisch gekoppelt sind, **dadurch gekennzeichnet**, daß die Planetendifferentiale in separate Getriebehäuse (2;3), die um einen Einstellwinkel α verschwenkbar am Getriebegehäuse des Schaltgetriebes (1) lösbar befestigt sind, angeordnet und an den Außenseiten dieser Getriebegehäuse (2;3) auf die Stegwellen (13) einwirkende Bremsen (21) vorgesehen sind, wobei mindestens in einem der Getriebegehäuse (2;3) die Abtriebswelle (14) eines Lenkgetriebes gelagert und durch Stirnräder (19;20) mit dem Sonnenrad (16) und einer, die kinematische Kopplung zwischen den Planetendifferentialen herstellenden Welle (6) und im Getriebegehäuse (2) die Welle (6) der kinematischen Kopplung über das Stirnrad (18) und ein Zwischenrad (17) mit dem Sonnenrad (16) drehverbunden ist.

2. Lenkeinrichtung nach Anspruch 1, **dadurch gekennzeichnet**, daß zwischen den Getriebegehäusen (2;3) eine der Welle (6) zugeordnete staubdichte Abdeckung vorgesehen und an den Gehäusen (2;3) lösbar befestigt ist.

3. Lenkeinrichtung nach Anspruch 2, **dadurch gekennzeichnet**, daß die Abdeckung aus teleskopartig ineinandergreifenden, längsverstellbaren Rohrelementen (7;8) besteht, zwischen denen eine Dichtung (9) vorgesehen ist und die endseitig mit einem Befestigungsflansch ausgestattet sind.

4. Lenkeinrichtung nach Anspruch 1, **dadurch gekennzeichnet**, daß das Lenkgetriebe ein Hydromotor (5) ist, der direkt am Getriebegehäuse (3) befestigt ist.

## Claims

1. A steering device for a track laying running gear including static displacement drive means, comprising differential means in the form of planetary gear units (13; 15; 16; 22), each associated with the driving wheels of the track laying running gear, the ring gears (15) of the two planetary gear units being fixedly connected to the output shaft (23) of the shift transmission gear (1) of the vehicle drive (4), and the carrier shafts (13) of the planet wheels (22) being fixedly connected to one of the driving shafts of the driving wheels of the crawler track, with the sun gears (16) being kinematically coupled to each other through a compensating member (6; 17; 18, 19), characterized in that the planetary gear type differentials are arranged in separate transmission gear cases (2; 3) detachably fixed to the gear case of the shift transmission gear (1) to be pivotable by an adjustable angle α, and brakes (21) acting on the carrier shafts are provided on the outside surfaces of the transmission gear case, with the output shaft (14) of a steering gear being supported at least by one of the transmission gear cases (2; 3) and rotatably connected, through spur gears (19; 20), to the sun gear (16) and a shaft (6) constituting the kinematic coupling between the planetary gear type differentials, and the shaft (6) of the kinematic coupling being rotatably connected, through the spur gear (18) and an intermediate gear, to the sun gear (16) in the transmission gear case (2).

2. A steering device as claimed in claim 1, characterized in that a dustproof cover associated with the shaft (6) is provided between, and detachably fixed to, the transmission gear cases (2; 3).

3. A steering device as claimed in claim 2, characterized in that the cover is composed of tubular elements mating in a telescopic manner and longitudinally adjustable, between which a seal (9) is provided and which are, at the ends thereof, provided with a mounting flange.

4. A steering device as claimed in claim 1, characterized in that the steering gear is a hydraulic motor which is directly attached to the transmission gear case (3).

## Revendications

1. Dispositif de direction pour un train de roulement à chenilles muni d'un actionnement hydrostatique, se composant de dispositifs différentiels reliés les uns aux autres de façon cinématique et prenant la forme d'engrenages planétaires (13;15;16;22) qui sont associés chaque fois aux roues d'actionnement du train de roulement à chenilles, les couronnes intérieures (15) des deux engrenages planétaires étant reliées fixement à l'arbre de sortie (23) de la boîte de vitesses (1) de l'actionnement moteur (4) et les arbres de traverse (13) des roues planétaires (22) étant reliés fixement à l'un des arbres d'actionnement destinés aux roues d'actionnement de la chenilles alors que les roues solaires (16) sont accouplées les unes aux autres de façon cinématique par l'intermédiaire d'un membre de compensation (6;17;18;19), **caractérisé par le fait que** les différentiels planétaires sont disposés dans des boîtiers d'engrenage séparés (2;3) qui sont fixés de façon susceptible à être enlevés au boîtier d'engrenage de la boîte de vitesses (1) et de façon susceptible à pivoter autour d'un angle d'ajustage α et **que** des freins (21) agissant sur les arbres de traverse (13) sur les côtés extérieurs de ces boîtiers d'engrenage (2;3) sont prévus, l'arbre de sortie (14) d'un engrenage de direction étant au moins logé dans l'un des boîtiers d'engrenage (2;3) et étant relié rotativement par des roues droites (19;20) à la roue solaire (16) et à un arbre (6) établissant l'accouplement cinématique entre les différentiels planétaires et, dans l'autre boîtier d'engrenage (2), l'arbre (6) de l'accouplement cinématique étant relié rotativement à la roue solaire (16) par l'intermédiaire de la roue droite (18) et d'une roue intermédiaire (17).

2. Dispositif de direction selon la revendication 1, **caractérisé par le fait qu'**un recouvrement hermétique aux poussières et associé à l'arbre (6) est prévu entre les boîtiers d'engrenage (2;3) et fixé aux boîtiers (2;3) de façon susceptible à être enlevé.

3. Dispositif de direction selon la revendication 2, **caractérisé par le fait que** le recouvrement se compose d'éléments tubulaires (7;8) ajustables en longueur et mordant l'un dans l'autre à la façon d'un télescope, éléments entre lesquels une garniture (9) est prévue et qui sont équipés du côté des extrémités d'une bride de fixation.

4. Dispositif de direction selon la revendication 1, **caractérisé par le fait que** l'engrenage de direction est un moteur hydraulique (5) qui est directement fixé au boîtier d'engrenage (3).
